# EUROPÄISCHE PATENTANMELDUNG

(11) **EP 1 553 008 A1**
(43) Veröffentlichungstag der Anmeldung: **13.07.2005**
(21) Anmeldenummer: 04030230.9
(22) Anmeldetag: 21.12.2004
(51) Int. Cl.: B62D 7/22, F16D 3/76, B62D 1/16

(54) **Lenkungsvorrichtung**

(30) Priorität: 07.01.2004 DE 102004001137
(71) Anmelder: DaimlerChrysler AG, 70567 Stuttgart (DE)
(72) Erfinder: Röll, Roland, 70794 Filderstadt (DE)

(57) **Zusammenfassung**

Lenkungsvorrichtung für ein Kraftfahrzeug, mit einem Lenkrad (1), das über eine Welle (20) mit einem Lenkgetriebe (16) verbunden ist.

Die Welle (20) der Lenkungsvorrichtung umfasst ein erstes, schwingungsdämpfendes Element (27) und ein zweites Element (26), das gegenüber dem ersten Element (27) geringere Dämpfungseigenschaften aufweist.

## Beschreibung

Die Erfindung betrifft eine Lenkungsvorrichtung nach dem Oberbegriff des Anspruchs 1.

Aus der Offenlegungsschrift DE 3527236 A1 ist eine Lenkungsvorrichtung bekannt, die ein Ritzel und eine Zahnstange aufweist. Ritzel und Zahnstange sind in einem Getriebegehäuse angeordnet. Eine Reibvorrichtung soll an der Zahnstange auftretende Stoßkräfte abbauen. Damit sind beispielsweise durch Radflattern verursachte Lenkraddrehschwingungen gedämpft. Die Reibvorrichtung weist einen auf der Lenkspindel angeordneten Anlaufring auf, gegen die eine Reibscheibe angepresst ist. Die Anpresskraft ist durch eine vorgespannte Feder bestimmt.

Aufgabe der Erfindung ist es demgegenüber, eine Vorrichtung zum Dämpfen von Schwingungen in Fahrzeuglenkungen bereitzustellen, die auf eine zusätzliche Reibvorrichtung verzichtet.

Diese Aufgabe wird durch eine Lenkvorrichtung mit den Merkmalen des Anspruchs 1 gelöst.

Die erfindungsgemäße Lenkungsvorrichtung zeichnet sich durch eine Welle mit einem ersten, schwingungsbedämpfenden Element und einem zweiten Element, das gegenüber dem ersten Element geringere Dämpfungseigenschaften aufweist, aus. Die Welle ist aus zwei Elementen aufgebaut. Das erste Element ist für eine Entkopplung eines Lenkrades von Schwingungen im Lenkgetriebe, die durch Ungleichmäßigkeiten der Fahrbahn angeregt sind, vorgesehen. Das zweite Element hat im wesentlichen die Aufgabe im Betrieb des Kraftfahrzeuges auftretende Lenkmomente sicher zu übertragen. Daher ist für das zweite Element ein drehsteifer metallischer Werkstoff vorzusehen, dessen Dämpfungseigenschaften gegenüber dem ersten Element geringer sind. In vorteilhafter Weise ist über die erfindungsgemäße Welle eine Schwingungsdämpfung sowie eine sichere Momentenübertragung dargestellt.

In Ausgestaltung der Erfindung verformt sich das erste Element bei Torsionsimpulsen mit kleinen Auslenkungen und dämpft Schwingungen. Unter Torsionsimpulsen mit kleinen Auslenkungen sind durch Fahrbahnanregung erzeugte Schwingungen zu verstehen. Diese kleinen, nicht eine Fahrtrichtung des Kraftfahrzeuges bestimmende Schwingungen führen zu einer Verformung des ersten Elementes. Dadurch sind die Schwingungen bedämpft, weiter erfolgt in vorteilhafter Weise eine Schwingungsabkopplung vom Lenkrad.

In weiterer Ausgestaltung der Erfindung ist das erste Element aus einem schwingungsdämpfenden Elastomerwerkstoff hergestellt. Elastomerwerkstoff ist elastisch, gleichzeitig ist durch eine innere Reibung im Werkstoff eine gute Dämpfungseigenschaft zu erzielen.

In weiterer Ausgestaltung der Erfindung weist das zweite Element bei Impulsen mit kleiner Auslenkung keine oder nur eine sehr kleine Federrate auf. Um die Dämpfungseigenschaften des ersten Elementes nutzen zu können, ist bei einer Parallelschaltung des ersten und des zweiten Elementes in dem Bereich kleiner Auslenkungen auf eine geringe Federsteifigkeit des zweiten Elements zu achten. Damit ist gewährleistet, dass die dämpfenden Eigenschaften des ersten Elementes gegenüber elastischen Einflüssen des zweiten Elementes dominieren und eine wirkungsvolle Schwingungsdämpfung erfolgt.

In weiterer Ausgestaltung der Erfindung weist das zweite Element bei großen Auslenkungen zur Übertragung des Lenkmomentes eine größere Federrate als bei kleinen Auslenkungen auf.
Größere Auslenkungen, d.h. größere Verdrehwinkel des zweiten Elementes treten beispielsweise bei einem die Fahrtrichtung des Kraftfahrzeuges bestimmenden Lenkausschlag auf. Um das Lenkmoment vom Lenkrad auf ein Ritzel des Lenkgetriebes sicher übertragen zu können ist eine ausreichende Federsteifigkeit des zweiten Elementes erforderlich.

In weiterer Ausgestaltung der Erfindung ist das zweite Element als geschlitztes Rohr ausgeführt, der Schlitz schließt sich unter einer vorgebbaren Torsionsbeanspruchung und bei geschlossenem Schlitz steigt die Federrate sprunghaft an. In einfacher Weise ist mit dem geschlitzten Rohr eine zweistufige Federkennlinie unter Torsionsbeanspruchung dargestellt. Solange der Schlitz bei kleineren Torsionsmomenten geöffnet ist, ist die Federsteifigkeit des Rohres gering. Damit sind bei einer Parallelschaltung des ersten und zweiten Elementes in diesem Betriebsbereich die dämpfenden Eigenschaften des ersten Elementes vorherrschend. Sobald der Schlitz des Rohres ab einem vorgebbaren Torsionsmoment geschlossen ist, steigt die Federsteifigkeit sprunghaft an. In diesem Betriebsbereich ist für die Federkennlinie der Welle die Federkennlinie des Rohres maßgebend.

In weiterer Ausgestaltung der Erfindung ist das erste Element in dem als Rohr ausgeführten zweiten Element in einer Parallelschaltung angeordnet und mit diesem fest verbunden. Die Parallelschaltung ist in einfacher Weise durch eine Anordnung des ersten Elementes in dem rohrförmigen zweiten Element realisiert. Das erste Element ist durch Verkleben oder Vulkanisation fest mit der Innenseite des Rohres verbunden.

In weiterer Ausgestaltung der Erfindung sind das erste Element und das zweite Element hintereinander geschaltet. Aufgrund der Hintereinanderschaltung und der hohen Unterschiede bezüglich der Verdrehsteifigkeit zwischen dem ersten und dem zweiten Element ist sichergestellt, dass sich zuerst das erste Element und bei weiter ansteigenden Torsionsmomenten das zweite Element verformt. Torsionsschwingungen führen daher vorwiegend zu einer Verformung des ersten Elementes, das die Schwingungen bedämpft.

In weiterer Ausgestaltung der Erfindung ist bis zu einem vorgebbaren Winkel das erste Element gegenüber dem zweiten Element verdrehbar und bei größeren Winkeln verdreht sich ausschließlich das zweite Element. Die Drehmomentübertragungsfähigkeit des ersten Elementes ist begrenzt. Das erste Element kann nicht das maximale Lenkmoment übertragen. Daher ist vorgesehen das erste Element bis zu einem bestimmbaren Verdrehwinkel zu belasten, darüber hinausgehende Drehmomente sind von dem zweiten Element zu übertragen. Damit ist in vorteilhafter Weise das erste Element von einer Überbelastung geschützt.

In weiterer Ausgestaltung der Erfindung ist die Welle ein Drehstab einer Lenkkraftunterstützungseinrichtung, die in Abhängigkeit des Verdrehwinkels des Drehstabes eine Lenkunterstützungskraft erzeugt. Drehstäbe haben die Aufgabe der Lenkmomentsensierung in Lenkungsvorrichtungen mit Hilfskraftunterstützung. In Abhängigkeit des Verdrehwinkels des Drehstabes stellt sich die Höhe der Lenkkraftunterstützung ein. Dabei kann es sich um eine hydraulische Hilfskraftunterstützung handeln, bei der ein Lenkventil einen Druck, dessen Höhe vom Verdrehwinkel des Drehstabes abhängt, einem Kolbenzylinderaggregat zusteuert. Gleichermaßen kann ein Drehstab auch in einer elektrischen Hilfskraftunterstützung Anwendung finden. Ein elektrischer Sensor misst die Verdrehung des Drehsstabes und ein Elektromotor liefert ein vom Verdrehwinkel des Drehstabes abhängiges Drehmoment zur Lenkkraftunterstützung.

Weitere Merkmale und Merkmalskombinationen ergeben sich aus der Beschreibung sowie den Zeichnungen. Konkrete Ausführungsbeispiele der Erfindung sind in den Zeichnungen vereinfacht dargestellt und in der nachfolgenden Beschreibung näher erläutert. Es zeigen
- Fig. 1: eine schematisierte Gesamtdarstellung einer Fahrzeuglenkung,
- Fig. 2: Längsschnitt durch eine Lenkventileinheit,
- Fig. 3: Darstellung eines Längs- und Querschnittes eines Abschnittes eines erfindungsgemäßen Drehstabes,
- Fig. 4: qualitative Darstellung der Kennlinien eines erfindungsgemäßen Drehstabes und eines Drehstabes aus Vollmaterial und
- Fig. 5: Darstellung einer weiteren Ausführungsform eines Längs- und Querschnittes eines Abschnittes eines erfindungsgemäßen Drehstabes.

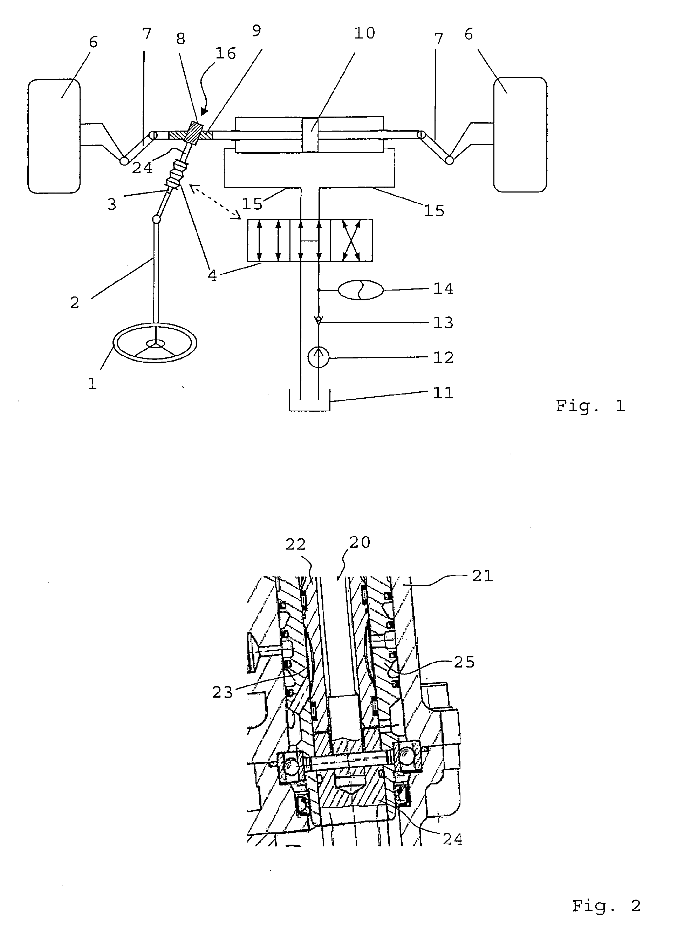

Gleiche Bauteile in den Figuren 1-5 sind im folgenden mit den gleichen Bezugszeichen bezeichnet.

Fig. 1 zeigt eine erfindungsgemäße Lenkungsanordnung eines nicht näher beschriebenen Kraftfahrzeuges. Eine Lenksäule 2 überträgt das von einem Fahrer auf ein Lenkrad 1 ausgeübte Lenkmoment auf eine Eingangswelle 3 eines Lenkgetriebes 16.

Das Lenkgetriebe 16 weist ein Gehäuse auf, dem ein Ritzel 8 und eine Zahnstange 9 zugeordnet ist. Das Ritzel 8 steht einerseits in Wirkverbindung mit der Eingangswelle 3 und andererseits im Eingriff mit der Zahnstange 9. Diese Anordnung setzt die Drehbewegung der Eingangswelle 3 bzw. des Ritzels 8 in eine Schiebebewegung der Zahnstange 9 um. Die Zahnstange 9 steht über eine linke und rechte Spurstange 7 mit den Vorderrädern 6 in Verbindung. Je nach Bewegungsrichtung der Zahnstange 9 lenken die Vorderräder 6 nach links oder rechts. Im Lenkgetriebe 16 ist des weiteren ein doppelseitiges Kolben-Zylinderaggregat 10 angeordnet, das mit der Zahnstange 9 gekoppelt ist. In Abhängigkeit der Drehrichtung des Lenkrades 1 ist entweder die rechte oder die linke Kolbenseite zur Lenkungsunterstützung mit Druck beaufschlagt. Ein Lenkventil 4 steuert den erforderlichen Öldruck in Abhängigkeit des Lenkmomentes. Neben der schematischen Darstellung des Lenkventils 4 ist in der Fig.1 zum besseren Verständnis der Funktion über einen Pfeil auf das symbolische Blockschaltbild des Lenkventils 4 verwiesen.

Eine mechanisch oder elektrisch angetriebene Lenkhelfpumpe 12 erzeugt einen für die Lenkungsunterstützung erforderlichen Öldruck. Die Lenkhelfpumpe 12 fördert Öl aus einem Tank 11 über eine Zulaufleitung und ein Rückschlagventil 13 zu dem Lenkventil 4 und von dort über Druckleitungen 15 zu dem Lenkgetriebe 16. Über eine Rücklaufleitung gelangt abgeregeltes Öl zurück in den Tank 11. In einer modifizierten Ausführungsform ist in dem Ölkreislauf ein Druckspeicher 14 angeordnet. Für den Fall, dass die Funktion der Lenkhelfpumpe 12 ausfällt, bleibt in diesem Fall die Lenkungsunterstützung noch eine gewisse Zeit erhalten.

Fig. 2 zeigt in einem Schnitt den Prinzipaufbau durch das Lenkventil 4. Ein in einem Lenkventilgehäuse 21 angeordnete Welle 20, die als Drehstab ausgeführt ist, ist einerseits fest mit der in Fig. 1 gezeigten Eingangswelle 3 und andererseits mit der Ritzelwelle 24 bzw. dem Ritzel 8 des Lenkgetriebes 16 verbunden. Der Drehstab 20 ist auf Seite der Eingangswelle 3 mit einem Steuernuten 23 aufweisenden Drehschieber 22 verbunden. Die Ritzelwelle 24 ist mit einer Steuerbuchse 25 verbunden. Im montierten Zustand des Lenkventils 4 umschließt der Drehschieber 22 den Drehstab 20, der Drehschieber 22 ist wiederum von der Steuerbuchse 25 umschlossen, die in dem Lenkventilgehäuse 21 angeordnet ist. Der Drehstab 20 tordiert sich unter Last, aufgrund dieser Torsion verdreht sich der Drehschieber 22 gegenüber der mit der Ritzelwelle 24 verbundenen Steuerbuchse 25. In dem Drehschieber 22 angeordnete Steuernuten 23 verdrehen sich gegenüber Zulauföffnungen, die in der Steuerbuchse 25 angeordnet und in der Zeichnung nicht weiter dargestellt sind. In Abhängigkeit des Verdrehwinkels verändern sich damit die öldurchströmbaren Querschnitte in dem Lenkventil 4. Damit ist eine für die Lenkungsunterstützung erforderliche lenkmomentabhängige Druckregelung realisiert.

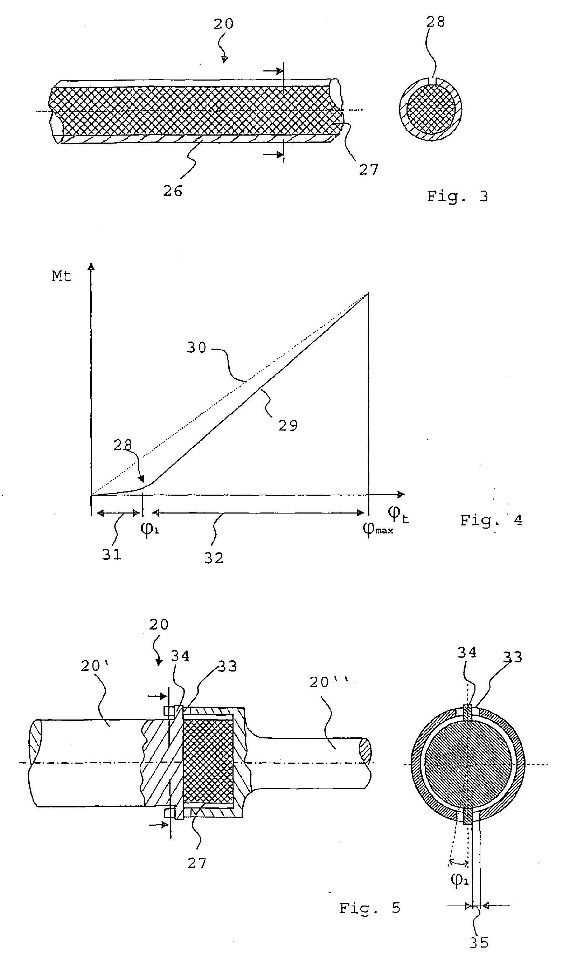

In Fig. 3 ist ein Abschnitt der als Drehstab 20 ausgeführten, erfindungsgemäßen Welle dargestellt. Der Drehstab 20 ist mit dem Drehschieber 22 und der Ritzelwelle 24 verbunden und gemäß Fig. 3 ausgeführt. Der Drehstab 20 ist aus einem ersten, schwingungsdämpfenden Element 27 wie beispielsweise einem Elastomerkern und einem zweiten, als geschlitztes Rohr ausgeführten Element 26 mit geringern Dämpfungseigenschaften aufgebaut. Das schwingungsdämpfende Element 27 ist fest, beispielsweise durch Vulkanisation mit der Innenfläche des geschlitzten Rohres 26 verbunden. In Fig. 4 sind die Torsionskennlinien 30, 29 eines Drehstabes 20 aus Vollmaterial und eines erfindungsgemäßen Drehstabes 20 dargestellt. Das geschlitzte Rohr 26 ist gemäß der Kennlinie 29 bis zu dem Verdrehwinkel ϕ₁, bei dem sich der Schlitz 28 schließt, sehr verdrehweich, d.h. ein sehr kleines Torsionsmoment Mt reicht aus um das Rohr 26 bis zum Winkel ϕ₁ zu tordieren, siehe Bereich 31. Ab dem in Fig. 4 dargestellten Verdrehwinkel ϕ₁ ist der Schlitz 28 geschlossen und die Verdrehsteifigkeit des Rohres 26 steigt im Bereich 32 an, so dass sich bis zu dem maximalen Verdrehwinkel ϕₘₐₓ ein Torsionsmoment entsprechend der Kennlinie 30, d.h. wie bei einem Drehstab 20 aus Vollmaterial, einstellt.

Eine von Fahrbahnungleichmäßigkeiten ausgelöste Schwingungsanregung der Räder 6 setzt sich über die Zahnstange 9, das Ritzel 8 und den Drehstab 20 bis zum Lenkrad 1 fort. Die am Lenkrad 1 auftretende, als Shimmy bezeichnete Drehschwingungen sind vorteilhaft durch den erfindungsgemäßen Drehstab 20 reduzierbar. Die bei Shimmy auftretenden Schwingungen weisen im allgemeinen eine kleine Amplitude auf. Unter dieser Belastung weist der Drehstab 20 eine Kennlinie 29 des Bereiches 31 aus Fig.4 auf. Durch die Verdrehung des schwingungsdämpfenden Elementes 27 ist die Schwingung bedämpft und setzt sich nicht bis zum Lenkrad 1 fort. Bei kleinen Amplituden ist das dem parallel zum Elastomer 27 geschaltete Rohr 26 aufgrund des Schlitzes 28 verdrehweich, so dass die Federsteifigkeit des Drehstabes 20 in diesem Betriebspunkt im wesentlichen von dem schwingungsdämpfenden Element 27 bestimmt ist. Damit sind gute Dämpfungseigenschaften erzielbar, die eine auftretende Drehschwingung schnell abklingen lässt. Zur Übertragung von Torsionsmomenten wie beispielsweise Lenkmomenten, die eine über dem Verdrehwinkel ϕ₁ liegende Verdrehung des Drehstabes 20 bewirken, steigt die Verdrehsteifigkeit des Drehstabes stark an, siehe Bereich 32. Diese Verdrehsteifigkeit sichert eine zuverlässige Übertragung des Lenkmomentes vom Lenkrad 1 zum Lenkgetriebe 16.

In einem in Fig. 5 gezeigten Ausführungsbeispiel ist der Drehstab 20 zweiteilig aus einem ersten Abschnitt 20' und einem zweiten Abschnitt 20" aufgebaut. Zwischen dem ersten und zweiten Drehstababschnitt 20', 20'' ist ein schwingungsdämpfendes Element 27 angeordnet. Der erste Drehstababschnitt 20' weist Mitnehmerzapfen 34 auf, die in Ausnehmungen 33 des zweiten Drehstababschnitts 20'' eingreifen.

Ist der Drehstab 20 mit einem Torsionsmoment belastet, so verdrehen sich die Mitnehmerzapfen 34 innerhalb des Verdrehspieles 35. Damit ist bis zu einem Verdrehwinkel ϕ₁ im wesentlichen das schwingungsdämpfende Element 27 verdreht. Von der Fahrbahn angeregte, auf den Drehstab 20 wirkende Torsionsschwingungen deren Amplitude unterhalb dem Verdrehwinkel ϕ₁ liegt sind damit stark bedämpft und vom Lenkrad 1 entkoppelt, siehe Bereich 31 des Diagramms in Fig. 3. Bei größeren Torsionsmomenten wie beispielsweise Lenkmomenten beim Fahrzeugrangieren ist das Verdrehspiel aufgebraucht, so dass das schwingungsdämpfende Element 27 sich nicht weiter verdrehen kann. Die Verdrehsteifigkeit des Drehstabes 20 steigt gemäß dem Bereich 32 in Fig. 3 an. Der Drehstab 20 weist in diesem Bereich 32 die erforderliche Verdrehsteifigkeit auf, die zur Übertragung des Drehmomentes zwischen Lenkrad 1 und dem Lenkgetriebe 16 geeignet ist. Über die Taillierung des zweiten Drehstabschnitts 20'' ist die Lenkungsunterstützung in Abhängigkeit des Lenkmomentes abstimmbar.

### Bezugszeichenliste

- 1: Lenkrad
- 2: Lenksäule
- 3: Eingangswelle
- 4: Lenkventil
- 5: -
- 6: Vorderräder
- 7: Spurstange
- 8: Ritzel
- 9: Zahnstange
- 10: Kolben-Zylinderaggregat
- 11: Tank
- 1.2: Lenkhelfpumpe
- 13: Rückschlagventil
- 14: Druckspeicher
- 15: Druckleitungen
- 16: Lenkgetriebe
- 17: -
- 18: -
- 19: -
- 20: Drehstab, Welle
- 20': Erster Drehstababschnitt
- 20": Zweiter Drehstababschnitt
- 21: Lenkventilgehäuse
- 22: Drehschieber
- 23: Steuernuten
- 24: Ritzelwelle
- 25: Steuerbuchse
- 26: Zweites Element, Rohr
- 27: Erstes Element, schwingungsdämpfendes Element
- 28: Schlitz
- 29: Torsionskennlinie eines erfindungsgemäßen Drehstabes
- 30: Torsionskennlinie eines Drehstabes aus Vollmaterial
- 31: Bereich mit verdrehweicher Kennlinie
- 32: Bereich mit höherer Verdrehsteifigkeit als Bereich 31
- 33: Ausnehmungen
- 34: Mitnehmerzapfen
- 35: Verdrehspiel

## Patentansprüche

1. Lenkungsvorrichtung für ein Kraftfahrzeug, mit
- einem Lenkrad (1), das über eine
- Welle (20) mit
- einem Lenkgetriebe (16) verbunden ist,
**dadurch gekennzeichnet,**
**dass** die Welle (20) ein erstes, schwingungsdämpfendes Element (27) und ein zweites Element (26), das gegenüber dem ersten Element (27) geringere Dämpfungseigenschaften aufweist, umfasst.

2. Lenkungsvorrichtung nach Anspruch 1,
**dadurch gekennzeichnet,**
**dass** sich das erste Element (27) bei Torsionsimpulsen mit kleinen Auslenkungen verformt und Schwingungen dämpft.

3. Lenkungsvorrichtung nach einem der Ansprüche 1 bis 2,
**dadurch gekennzeichnet,**
**dass** das erste Element (27) aus einem schwingungsdämpfenden Elastomerwerkstoff hergestellt ist.

4. Lenkungsvorrichtung nach einem der Ansprüche 1 bis 3,
**dadurch gekennzeichnet,**
**dass** das zweite Element (26) bei Impulsen mit kleiner Auslenkung keine oder eine nur sehr kleine Federrate aufweist.

5. Lenkungsvorrichtung nach einem der Ansprüche 1 bis 4,
**dadurch gekennzeichnet,**
**dass** das zweite Element (26) bei großen Auslenkungen zur Übertragung des Lenkmomentes eine größere Federrate als bei kleinen Auslenkungen aufweist.

6. Lenkungsvorrichtung nach einem der Ansprüche 1 bis 5,
**dadurch gekennzeichnet,**
**dass** das zweite Element (26) als geschlitztes Rohr ausgeführt ist, der Schlitz (28) sich unter einer vorgebbaren Torsionsbeanspruchung schließt und bei geschlossenem Schlitz (28) die Federrate sprunghaft ansteigt.

7. Lenkungsvorrichtung nach einem der Ansprüche 1 bis 6,
**dadurch gekennzeichnet,**
**dass** das erste Element (27) in dem als Rohr ausgeführten zweiten Element (26) in einer Parallelschaltung angeordnet und mit diesem fest verbunden ist.

8. Lenkungsvorrichtung nach einem der Ansprüche 1 bis 6,
**dadurch gekennzeichnet,**
**dass** das erste Element (27) und das zweite Element (26) hintereinander geschaltet sind.

9. Lenkungsvorrichtung nach einem der Ansprüche 1 bis 4,
**dadurch gekennzeichnet,**
**dass** bis zu einem vorgebbaren Winkel sich das erste Element (27) gegenüber dem zweiten Element (26) verdreht und bei größeren Winkeln sich ausschließlich das zweite Element (26) verdreht.

10. Lenkungsvorrichtung nach einem der Ansprüche 1 bis 9,
**dadurch gekennzeichnet,**
**dass** die Welle (20) ein Drehstab einer Lenkkraftunterstützungseinrichtung ist, die in Abhängigkeit des Verdrehwinkels des Drehstabes (20) eine Lenkunterstützungskraft erzeugt.
